# EUROPÄISCHE PATENTANMELDUNG

(11) **EP 2 209 096 A1**
(43) Veröffentlichungstag der Anmeldung: **21.07.2010**
(21) Anmeldenummer: 09015276.0
(22) Anmeldetag: 10.12.2009
(51) Int. Cl.: G07F 17/32, H04N 13/00

(54) **Verfahren zur Darstellung von virtuellen 3-D-Objekten mit einer in einem münzbetätigten Unterhaltungsautomaten angeordneten matrixbasierenden Anzeigeeinheit**

(30) Priorität: 13.01.2009 DE 102009004820
(71) Anmelder: adp Gauselmann GmbH, 32339 Espelkamp (DE)
(72) Erfinder: Gauselmann, Paul, 32339 Espelkamp (DE)

(57) **Zusammenfassung**

Verfahren zur Darstellung von virtuellen 3-D-Objekten mit einer in einem münzbetätigten Unterhaltungsautomaten angeordneten matrixbasierenden Anzeigeeinheit.

Münzbetätigte Unterhaltungsautomaten umfassen zur Darstellung von gewinnbringenden Symbolkombinationen eine Anzeigeeinheit. Von einer Steuereinheit mit einem Mikrocomputersystem des Unterhaltungsautomaten werden die darzustellenden Symbole und Symbolkombinationen generiert. Eine Darstellung von stereoskopischen Symbolen soll dahingehend vereinfacht werden, dass sie praxisgerecht zum Einsatz kommen können und das mit handelsüblichen, preiswerten Matrixanzeigen eine Verwirklichung erfolgen kann.

Zu diesem Zweck wird der matrixbasierenden Anzeigeeinheit eine Barrierescheibe zugeordnet um eine Richtungsseparation auf unterschiedliche Teilbilder der digitalen Bildelemente von jeweils nur bestimmten Betrachtungspositionen zu erhalten. Ein darzustellendes virtuelles 3-D-Objekt wird um eine vorgegebene Anzahl von Pixeln in x- und/oder y-Richtung versetzt in einen Bildspeicher der Anzeigeeinheit kopiert.

## Beschreibung

Die Erfindung bezieht sich auf ein Verfahren zur Darstellung von virtuellen 3-D-Objekten mit einer in einem münzbetätigten Unerhaltungsautomaten angeordneten matrixbasierenden Anzeigeeinheit gemäß dem Oberbegriff des Patentanspruchs 1.

Aus der DE 2 321 524 ist ein Verfahren zur stereoskopischen Darstellung von Raumbildern bekannt. Das Verfahren sieht vor, dass aus zwei Einzelbildern ein Raumbild gebildet wird. Dem rechten und linken Auge des Betrachters werden somit Bilder mit unterschiedlichen Informationsgehalt angeboten. Die Einzelbilder werden zeitlich nacheinander aufgebaut. Die Übertragung vom Aufzeichnungsort zum Betrachtungsort werden zeitlich nacheinander über einen Übertragungskanal geleitet. Dadurch bedingt nehmen die Augen des Betrachters zeitlich nacheinander die Information auf und fügen sie selbsttätig zu einem Einzelbild zusammen, wobei beim Betrachter der scheinbare Eindruck eines dreidimensionalen Objektes entsteht. Dieses Verfahren weist jedoch den Nachteil auf, dass die dazustellende Bildinformation aufgeteilt werden und im zeitlich festgelegten Zeitabständen dargestellt werden muss.

Der vorliegenden Erfindung liegt die Aufgabe zu Grunde, die stereoskopische Darstellung von Objekten dahingehend zu vereinfachen, dass sie praxisgerecht zum Einsatz kommen kann und mit handelsüblichen, preiswerten Matrixanzeigen dargestellt werden können.

Das erfindungsgemäße Verfahren, wie auch die Verwendung weist den Vorteil auf, dass einer handelsüblichen matrixartigen ausgebildeten Anzeigeeinheit durch ein Anbringen einer Barrierescheibe für den Betrachter ohne zu Hilfenahme einer weiteren Sehhilfe die dargestellten Objekte einen virtuellen 3-D-Eindruck aufweisen. Hinsichtlich der Aufbereitung der darzustellenden Symbole bedarf es keiner weitergehenden aufwendigen Arbeitsschritte. Die zur Anwendung kommenden Bildsymbole werden in einem der matrixbasierenden Anzeigeeinheit zugeordneten Bildspeicher abgelegt, wobei zur eigentlichen Ansteuerung der Anzeigeeinheit auf bekannte und bewährte Methoden und Technologien (z. B. LVDS) zurückgegriffen wird. Die mit dem virtuellen 3-D-Effekt darzustellenden Objekte werden um eine vorgegebene Pixelanzahl sowohl in X- als auch in Y-Richtung versetzt im Bildspeicher abgelegt. Das erfinderische Verfahren weist darüber hinaus den Vorteil auf, dass durch eine programmunterstützte Verschiebung von Bildinformationen die virtuelle 3-D-Darstellung von anzuzeigenden Objekten schnell und mit wenig Aufwand ausgeführt werden kann und daher der Einsatz im Unterhaltungsbereich zur Herstellung von virtuellen räumlichen Darstellungen auf Bildschirmen besonders geeignet ist.

Ein erfindungsgemäßes Ausführungsbeispiel wird nachfolgend näher erläutert.

Münzbetätigte Unterhaltungsautomaten umfassen zur Darstellung von gewinnbringenden Symbolkombinationen, wie auch zur Darstellung von Gewinnplänen mindestens eine matrixbasierende Anzeigeeinheit, die bevorzugt als Farb-LCD Bildschirm, Plasmadisplay, Projektionsbildschirm, LED basierter Bildschirm, OLED basierter Bildschirm, SED-Bildschirm oder als VDF-Bildschirm ausgebildet sind. Der Anzeigeeinheit ist unter Vermittlung eines vorgegebenen Abstandes ein als Barrierescheibe ausgebildeter Strahlteiler zugeordnet. Der paralaxe Barriereschirm umfasst unter einem vorgegebenen Winkel gegenüber der vertikalen geneigte, transparente und opake Abschnitte. Die Barrierestruktur kann zum einen ein belichteter oder entwickelter fotografischer Film sein, der rückseitig auf einem Glassubstrat auflaminiert ist, wobei bevorzugt die Emulsionsschicht des fotografischen Films nicht zum Glassubstrat weist. Alternativ hierzu können die opaken Bereiche der Barrierestruktur durch auf das Glassubstrat aufgedruckte Farbe gebildet werden. Die transparenten Bereiche entstehen dabei einfach durch das weglassen der Farbe auf den entsprechenden Bereichen.

Der Einsatz der Barrierestruktur auf einer handelsüblichen Anzeigeeinheit hat zur Folge, dass ohne einen weiteren Einsatz z. B. einer Brille, visuelle Effekte wie z. B. von räumlichen Gegenständen geschaffen wird, ohne dass großartig die Objektquelle aufwendig zu bearbeiten ist. Der erforderliche Aufwand zur Aufbereitung der Bildinhalte können an einer speziellen Software selbständig durchgeführt werden.

Der Einsatz des erfindungsgemäßen Verfahrens weist einen weiteren Vorteil auf, dass einzelne besondere Gewinnsymbole als virtuelles 3-D-Objekt dargestellt werden können. Insbesondere werden die Objekte als virtuelles 3-D-Objekt dargestellt, die den Hauptgewinn symbolisieren. Darüber hinaus kann auch der in einer Anzeigeeinheit dargestellt Gewinnplan virtuelle 3-D-Objekte aufweisen. Beim Eintreffen einer besonderen Gewinnkombination wird dann der Bereich des Gewinnplans als virtuelles 3-D-Objekt dargestellt.

Eine weitergehende vorteilhafte Ausgestaltung des erfindungsgemäßen Verfahrens wird dadurch erzielt, dass mittels der Frontseitig des Unterhaltungsautomaten angeordneten und mit der Steuereinheit des Unterhaltungsautomaten in Verbindung stehenden Bedienelementen der Grad des virtuellen 3-D-Effekts einstellbar ist. Der Benutzer des Unterhaltungsautomaten kann durch die Betätigung des besonders gekennzeichneten Bedienelementes die Intensität des virtuellen 3-D-Effekts einstellen. Dies wird insbesondere dadurch erreicht in dem die Steuereinheit ermittelt wie häufig das entsprechende Bedienelementen betätigt wurde. Für jede Betätigung des Bedienelements wird von der Steuereinheit der Pixelversatz des Objektes im Bildspeicher entsprechend in der X- und Y-Richtung durchgeführt.

## Patentansprüche

1. Verfahren zur Darstellung von virtuellen 3-D-Objekten mit einer matrixbasierenden Anzeigeeinheit eines münzbetätigten Unterhaltungsautomaten, der eine Steuereinheit mit einem Mikrocomputersystem zur Ablaufsteuerung umfasst, von der anzuzeigenden Gewinnsymbole mittels eines Pseudozufallsgenerators aus einer vorgegebenen Gewinnsymbolmenge ermittelt und in einen der matrixbasierenden Anzeigeeinheit zugeordneten Speicher kopiert werden,
**dadurch gekennzeichnet,**
**dass** einer Frontseite der matrixbasierende Anzeigeeinheit ein Barrierescheibe zugeordnet ist um eine Richtungsseparation auf unterschiedliche Teilbilder der digitalen Bildelemente von jeweils nur bestimmten Betrachtungspositionen zu erhalten und dass ein darzustellendes virtuelles 3-D-Objekt um eine vorgegebene Anzahl von Pixel in X- und/oder Y-Richtung versetzt (N + 1) mal in den Bildspeicher der Anzeigeeinheit kopiert werden.

2. Verfahren nach Anspruch 1,
**dadurch gekennzeichnet,**
**dass** entsprechend eines Gewinnplans ein und mehr Gewinnsymbole als virtuelles 3-D-Objekt dargestellt werden.

3. Verfahren nach Anspruch 1 und/oder 2,
**dadurch gekennzeichnet,**
**dass** beim Erreichen einer vorgegebenen Gewinnkombination, die dazu verwandten Objekte und/oder der dieser Gewinnkombination zugeordnete Gewinnwert als virtuelles 3-D-Objekt dargestellt wird.

4. Verfahren nach einem oder mehreren der vorangegangenen Ansprüche,
**dadurch gekennzeichnet,**
**dass** nach Betätigung eines frontseitig angeordneten Bedienelements die Intensität des virtuellen 3-D-Effekts vom Benutzer des Unterhaltungsautomaten einstellbar ist.

5. Verwendung einer matrixbasierenden Anzeigeeinheit zur Darstellung von virtuellen 3-D-Objekten in einem münzebetätigten Unterhaltungsautomaten,
**dadurch gekennzeichnet,**
**dass** der matrixbasierenden Anzeigeeinheit eine Barrierescheibe zugeordnet ist, die als Strahlteiler wirkt und die dafür sorgt, dass jedes Auge des Betrachters eine leicht unterschiedliche Perspektive auf der von der matrixbasierenden Anzeigeeinheit dargestellten virtuellen 3-D-Objekte hat, und dass das virtuelle 3-D-Objekt im Bildspeicher der Anzeigeeinheit mehrfach um (N + 1) Pixel in der X- und/oder Y-Achse versetzt vorhanden ist.
